# FASCICULE DE BREVET EUROPEEN

(11) **EP 1 090 247 B1**
(45) Date de publication et mention de la délivrance du brevet: **12.11.2003**
(21) Numéro de dépôt: 99926569.7
(22) Date de dépôt: 30.06.1999
(51) Int. Cl.: F16L 37/084

(54) **EMBOUT DE CONNEXION RAPIDE AYANT UNE PIECE MONOBLOC COMPRENANT UN ANNEAU DE VERROUILLAGE ET UNE BAGUE ADDITIONNELLE**
SCHNELLVERBINDUNGSSTÜCK MIT EINEM EINTEILIGEN FORMGEGENSTAND MIT EINEM VERRIEGELUNGSRING UND EINER ZUSÄTZLICHEN HÜLSE
FAST CONNECTING END PIECE HAVING A SINGLE-PIECE PART COMPRISING A LOCKING RING AND AN ADDITIONAL RING

(30) Priorité: 01.07.1998 FR 9808383
(43) Date de publication de la demande: 11.04.2001
(73) Titulaire: Etablissements CAILLAU, 92130 Issy-les-Moulineaux (FR)
(72) Inventeur: BOUQUET, Laurent, F-41200 Romorantin Lanthenay (FR); ANDRE, Michel, F-41200 Romorantin Lanthenay (FR); DETABLE, Pascal, 41 130 Gievres (FR)
(74) Mandataire: Intès, Didier Gérard André
(86) Numéro de dépôt international: FR9901567
(87) Numéro de publication internationale: WO00001975

(56) Documents cités:
- EP-A- 0 448 790
- DE-A- 19 540 784
- DE-C- 4 413 346
- GB-A- 2 240 149
- US-A- 4 943 091

## Description

La présente invention concerne un embout de connexion rapide susceptible d'être emmanché sur un tube rigide qui présente un bourrelet en saillie radiale distant de son extrémité libre.

L'embout comprend un corps qui présente une cavité interne ayant une première partie susceptible de contenir des moyens d'étanchéité et une deuxième partie située entre la première partie de ladite cavité et l'entrée du corps de l'embout. Un anneau de verrouillage est disposé dans cette deuxième partie et est retenu contre un arrachement hors du corps de l'embout par des moyens de retenue. L'anneau de verrouillage présente un profil fermé et comporte au moins une zone de verrouillage située dans une région dudit anneau dans laquelle le rayon de cet anneau est minimum, ledit anneau de verrouillage étant susceptible d'adopter une configuration de verrouillage dans laquelle ladite zone de verrouillage est apte à coopérer avec le bourrelet du tube pour maintenir ce dernier en place dans l'embout et une configuration de déverrouillage dans laquelle la zone de verrouillage est déplacée élastiquement pour être située sur un rayon au moins égal au rayon du bourrelet du tube

La paroi de la cavité interne présente, dans sa portion axiale, au moins une fente débouchant dans la deuxième partie de cette cavité, fente à travers laquelle dépasse une zone de l'anneau de verrouillage située dans une région dudit anneau dans laquelle le rayon de cette anneau. est maximal, cette zone constituant une zone de manipulation et étant susceptible d'être manipulée en étant rapprochée de l'axe de l'embout pour déplacer la zone de verrouillage et solliciter ainsi l'anneau de verrouillage de sa configuration de verrouillage dans sa configuration de déverrouillage.

Un embout de connexion de ce type est connu par le document EP 0 651 198 au nom de la société demanderesse. Cet embout donne satisfaction dans la mesure où l'anneau de verrouillage permet un verrouillage satisfaisant du point de vue de la sécurité, tout en autorisant un déverrouillage aisé par une simple action manuelle sur la ou les zones de manipulation.

Cet embout, connu par EP-A-0 651 198 comporte, en outre, une bague de blocage du joint d'étanchéité formée par un disque qui vient pratiquement fermer le logement du joint. Pour le montage, cette bague est disposée dans une partie arrière du corps de l'embout à laquelle on vient raccorder une partie avant qui contient l'anneau de verrouillage. Les deux parties du corps de l'embout sont serties l'une sur l'autre et la bague de blocage est pincée entre elles pour être maintenue en place.

L'embout de EP-A-0 651 198 comporte un corps en plusieurs parties, une partie avant avec laquelle coopère l'anneau de verrouillage étant raccordée par sertissage aux autres parties de ce corps.

Ainsi, l'embout de connexion que décrit EP 0 651 198 donne satisfaction mais présente l'inconvénient de nécessiter encore un nombre de pièces trop important, même s'il constituait déjà une simplification des embouts préexistants.

DE 195 40 784 montre un embout du même type.

On connaît un embout du même genre par le document EP 0 605 801. Selon ce document, une bague de blocage des joints d'étanchéité est mise en place dans une partie du corps de l'embout avant la mise en place de la bague de verrouillage, qui est insérée radialement par des ouvertures prévues à cet effet. Là encore, la bague de blocage et la bague de verrouillage forment deux éléments séparés. La demande EP 0605 801 est silencieuse quant à la manière dont cette bague de blocage est maintenue en place dans l'embout. Il semble toutefois que ce maintien en place soit simplement lié à la présence d'un épaulement qui empêche la bague de blocage de s'enfoncer à l'intérieur de l'embout et, de l'autre côté de cet épaulement, à une coopération en butée contre les zones de verrouillage de la bague de verrouillage. Ce maintien en place est peu sécurisant puisque, lorsque la bague de verrouillage est sollicitée vers sa position déverrouillée, ce qui revient à écarter les zones de verrouillage, la bague de blocage risque d'échapper à la coopération en butée avec lesdites zones de verrouillage et de se déplacer légèrement.

On connaît-encore, par le document WO 93/20 379, un embout de connexion comportant une pièce de retenue monobloc, qui joue à la fois le rôle d'un organe de verrouillage par des arêtes de verrouillage qu'elle comporte et celui d'une pièce de maintien en place des joints, par son extrémité intérieure. Toutefois, ce maintien des joints n'est pas satisfaisant et une rondelle additionnelle est disposée entre les joints et l'extrémité intérieure de la pièce de retenue. De plus, la configuration de cette pièce est telle qu'il n'est pas possible de l'actionner manuellement entre sa position de verrouillage et sa position de déverrouillage et que, lorsqu'elle occupe sa position de déverrouillage, il existe un risque qu'elle se déplace de façon telle que le ou les joints cessent d'être correctement maintenus en place par l'intermédiaire de la rondelle.

Ainsi, dans EP 0 605 801, comme dans WO 93/20379, il est nécessaire de disposer de deux pièces pour le verrouillage et pour coopérer avec les joints en vue de les maintenir en place. L'assemblage de ces deux pièces dans le corps de l'embout est délicat et doit être réalisé avec précision. De plus, sur la ligne de fabrication, les stocks pour ces deux pièces doivent être approvisionnés et tenus à jour.

On connaît encore, par le document GB 2 240 149, un embout ayant deux arêtes de verrouillage situées en vis-à-vis et raccordées à une bague par des bras axiaux. Ces deux arêtes ne sont pas situées sur le profil fermé d'une bague de verrouillage et l'élasticité des bras qui les relient à la bague risque de ne pas être suffisante pour garantir qu'ils restent en positon de verrouillage lorsque des contraintes d'arrachement élevées sont appliquées sur le tube engagé dans l'embout. D'un autre côté, les deux arêtes de verrouillage ne peuvent pas être écartées manuellement pour permettre le déverrouillage de la connexion, dans la mesure ou l'organe de verrouillage ne présente aucune zone de manipulation.

La bague à laquelle sont reliées les arêtes de verrouillage par les bras axiaux semble permettre le blocage des joints d'étanchéité mais, comme indiqué précédemment, ceci est réalisé au détriment des fonctions verrouillage et déverrouillage de la connexion.

DE 44 13 346 améliore la fonction verrouillage en dotant les arêtes de verrouillage d'un chanfrein qui permet de les bloquer contre les bords des fentes dans lesquelles elles sont situées lorsqu'un effort d'arrachement exercé sur ce tube tend à déplacer l'organe de verrouillage vers l'entrée de l'embout. Toutefois, la bague à laquelle sont raccordées ces arêtes se déplace avec elles, de sorte qu'elle n'est pas capable d'assurer un maintien effectif des joints d'étanchéité.

La présente invention a pour but de proposer un embout de connexion comportant un nombre de pièces limité tout en permettant un verrouillage du tube à l'intérieur de l'embout satisfaisant et en autorisant une manipulation manuelle de cet anneau de verrouillage entre ses positions de verrouillage et de déverrouillage.

Ce but est atteint grâce au fait que l'anneau de verrouillage est relié, par au moins une lamelle de liaison flexible, à au moins une bague rigide, ledit anneau et ladite bague étant situés l'un à côté de l'autre dans la direction axiale, l'ensemble comprenant l'anneau de verrouillage, la bague rigide et la ou les lamelles de liaison formant une seule pièce, dénommé "pièce mixte", au fait que la bague rigide est munie de premiers moyens de maintien aptes à coopérer avec des deuxièmes moyens de maintien solidaires du corps de l'embout pour caler ladite bague par rapport au corps de l'embout indépendamment des sollicitations exercées sur l'anneau de verrouillage et au fait que la bague rigide est apte à assurer une fonction distincte. de la fonction de verrouillage qui est assurée par l'anneau de verrouillage.

Grâce à ces dispositions, on réalise à l'aide de la seule pièce mixte, la fonction de verrouillage et une fonction supplémentaire. Cette fonction supplémentaire peut être celle consistant à maintenir en place le ou les joints d'étanchéité dans la première partie du corps de l'embout. Elle peut également consister à doter l'entrée de l'embout d'un élément de paroi radiale, réalisée par la bague rigide, afin de fermer l'entrée de l'embout vis-à-vis des éléments. (anneaux de verrouillage, joints d'étanchéité...) contenus dans ce corps. En particulier, dans ce cas, la bague rigide d'entrée peut concourir à retenir l'anneau de verrouillage à l'intérieur du corps du l'embout.

La bague rigide est parfaitement maintenue en place à l'intérieur de l'embout grâce à la présence des premier et deuxième moyens de maintien. En d'autres termes, quelles que soient les sollicitations exercées sur l'anneau de verrouillage, la bague rigide ne se déplace pas. En particulier, lorsque cette bague sert à bloquer les joints d'étanchéité, le blocage est parfaitement assuré indépendamment de la fonction de verrouillage, malgré le fait que, selon l'invention, l'anneau de verrouillage et la bague de blocage sont réalisés en une seule pièce mixte.

Par ailleurs, le fait de réaliser l'anneau de verrouillage et la bague rigide en une seule pièce ne nuit pas non plus ni à la fonction de verrouillage ni à la fonction de déverrouillage. En effet, l'élasticité de l'anneau de verrouillage permettant à la ou les zones de verrouillage de retenir le renflement du tube est parfaitement assurée par le fait que l'anneau de verrouillage présente un profil fermé, ceci indépendamment de la présence de la bagué rigide. Par ailleurs, l'anneau de verrouillage est retenu à l'intérieur du corps de l'embout, en particulier par un élément de paroi radiale situé à l'entrée de ce corps, cet élément pouvant être réalisé sur la bague rigide si, comme on l'a indiqué précédemment, celle-ci est disposée à l'entrée du corps de l'embout. La fonction de déverrouillage continue quant à elle d'être simplement réalisée par manipulation de zones de manipulation de l'anneau fermé de verrouillage. Cet anneau étant relié à la bague rigide par une ou plusieurs lamelles flexibles, la déformation élastique qui permet le déverrouillage n'influe pas sur la bague rigide.

Avantageusement, l'anneau de verrouillage comporte deux zones de verrouillage espacées angulairement sur le profil fermé de cet anneau. Dans ce cas, le déverrouillage est réalisé en écartant l'une de l'autre ces zones de verrouillage sous l'effet de la pression exercée sur la ou les zones de manipulation. Ces zones de verrouillage sont par exemple situées en vis-à-vis et leur écartement correspond aux dimensions diamétrales les plus faibles de l'anneau.

Il est également avantageux que la paroi de la cavité interne présente, dans sa portion axiale, deux fentes diamétralement opposées débouchant dans la deuxième partie de cette cavité, fentes à travers lesquelles dépassent respectivement deux zones de l'anneau fermé de verrouillage dont l'écartement correspond aux plus grandes dimensions diamétrales dudit anneau, ces deux zones constituant des zones de manipulation et étant susceptibles d'être manipulées en étant rapprochées l'une de l'autre pour solliciter l'anneau de verrouillage de sa configuration de verrouillage dans sa configuration de déverrouillage.

Lorsque deux zones de verrouillage sont présentes, cette manipulation revient à écarter l'une de l'autre ces zones de verrouillage.

Selon un premier mode de réalisation, la pièce mixte-comprend une bague rigide constituée par une bague de blocage qui coopère directement avec un joint d'étanchéité appartenant aux moyens d'étanchéité pour maintenir ces derniers en place dans la première partie de la cavité interne, ladite bague de blocage étant située derrière l'anneau de verrouillage dans le sens allant de l'entrée de l'embout vers ladite première partie de la cavité interne.

Dans ce cas, la pièce mixte sert à assurer la fonction verrouillage et la fonction blocage des joints. La bague de blocage est directement maintenue en place dans le corps de l'embout indépendamment de la retenue dans ce corps de l'anneau de verrouillage, du fait la présence de la ou des lamelles de liaison flexibles entre l'anneau de verrouillage et la bague de blocage, et du fait des moyens de maintien de ladite bague par rapport au corps de l'embout.

Il n'est pas nécessaire de prévoir un élément intermédiaire telle qu'une rondelle entre la bague de blocage et le joint d'étanchéité avec lequel elle coopère. Le nombre de pièces de l'embout est limité en conséquence.

Avantageusement, la bague de blocage est maintenue de la façon suivante par rapport au corps de l'embout : l'embout comprend un élément de paroi radiale d'entrée solidaire du corps de l'embout et situé à l'entrée de ce dernier, ledit élément s'étendant, à partir d'une portion axiale de la paroi du corps de l'embout, vers l'axe dudit embout ; de son côté, la bague rigide de blocage comporte au moins une patte rigide qui s'étend sous une zone de manipulation de l'anneau de verrouillage, ladite patte rigide coopérant avec ledit élément de paroi radiale pour Caler la bague de blocage par rapport au corps de l'embout.

Encore plus avantageusement, dans le cas où l'anneau de verrouillage comporte deux zones de manipulation, la bague rigide de blocage comporte deux pattes radiales rigides qui s'étendent, chacune, sous une zone de manipulation de l'anneau de verrouillage et coopèrent toutes deux avec l'élément de paroi radiale pour caler la bague de blocage.

La bague de blocage est ainsi parfaitement Calée sans rendre nécessaire une conformation particulière du corps de l'embout autre que la présence de l'élément de paroi radiale. La ou les pattes rigides passent sous la ou les zones de manipulation de l'anneau de verrouillage, de sorte qu'elles peuvent sans difficulté être espacées de l'axe de l'embout d'une distance au moins égale au rayon du renflement du tube destiné à coopérer avec cet embout. Ainsi, les pattes ne nuisent aucunement à l'introduction du tube dans l'embout et peuvent même concourir au guidage de ce tube en coopérant à coulissement avec le renflement que présente ce dernier.

Il est également avantageux de prévoir que la cavité interne du corps présente, dans une zone intermédiaire entre ses première et deuxième parties, au moins une surface de maintien pour la bague de blocage tournée à l'opposé de l'entrée de l'embout et ladite bague de blocage présente au moins une surface de blocage apte à coopérer avec ladite surface de maintien.

Ces surfaces de blocage et de maintien sont par exemple mises en mutuelle coopération par encliquetage de la bague de blocage.

Selon un autre mode de réalisation avantageux, la pièce mixte comprend une bague rigide constituée par une bague d'entrée disposée, dans le corps de l'embout, à l'entrée de ce demier et présentant des moyens formant collerette coopérant avec un repli de la paroi du corps de l'embout pour retenir la bague d'entrée par rapport à ce corps, la face arrière de cette bague d'entrée, qui est tournée du côté de l'anneau de verrouillage, formant ainsi un élément de paroi radiale qui s'étend vers l'axe de l'embout à partir d'une portion axiale de la paroi de la cavité interne de l'embout.

Dans ce cas, la bague rigide d'entrée sert donc à "fermer" la cavité interne du corps de l'embout du côté de l'entrée de ce dernier. Bien entendu, la périphérie interne de cette bague présente toutefois un diamètre permettant l'introduction dans le corps de l'embout du tube avec son bourrelet.

L'élément de paroi radiale formé par la face arrière de la bague d'entrée peut servir à retenir l'anneau de verrouillage vis-à-vis de son arrachement hors du corps de l'embout.

La paroi axiale du corps de l'embout peut coopérer avec les moyens formant collerette en étant déformée sur ces moyens à la manière d'un sertissage.

Selon une disposition avantageuse, l'embout comporte un élément de paroi interne qui s'étend sensiblement radialement à l'intérieur du corps de cet embout et la bague rigide d'entrée présente au moins un prolongement de calage qui s'étend, à partir de ladite bague, dans le sens opposé à l'entrée du corps de l'embout, ce prolongement de calage coopérant avec ledit élément de paroi interne pour retenir la bague rigide d'entrée contre un déplacement de ladite bague vers l'intérieur du corps de l'embout.

Le prolongement de calage est situé à une distance suffisante de l'axe de l'embout pour ne pas gêner l'introduction du tube avec son bourrelet dans cet embout. Lorsqu'il est. présent, il peut suffir de rabattre la paroi axiale du corps de l'embout contre la face "avant" des moyens formant collerette de la bague rigide, ce qui retient ladite bague contre un effort d'arrachement en dehors du corps de l'embout, le prolongement de calage servant quant à lui à empêcher que cette bague ne se déplace dans l'autre sens.

Avantageusement, l'élément de paroi interne précité est situé derrière l'anneau de verrouillage dans le sens allant de l'entrée du corps de l'embout vers la première partie de la cavité interne dudit embout et la bague rigide d'entrée présente au moins une patte de calage qui s'étend sous une zone de manipulation de l'anneau de verrouillage et coopère avec ledit élément de paroi interne.

Etant situées sous les zones de manipulation de l'anneau de verrouillage, cette ou ces pattes de calage peuvent être espacées de l'axe de l'embout d'une distance égale ou supérieure au rayon du bourrelet du tube dont elles ne gênent pas l'introduction dans l'embout, elles peuvent même concourir au guidage de ce tube.

De manière avantageuse, la pièce mixte comporte à la fois l'anneau de verrouillage, une première bague rigide constituant la bague de blocage des moyens d'étanchéité, et une deuxième bague rigide formant la bague d'entrée qui coopère avec la paroi du corps de l'embout à l'entrée de ce dernier. L'anneau de verrouillage est alors disposé entre ces deux bagues rigides.

Pour éviter que la ou les lamelles de liaison flexibles ne limitent la capacité de l'anneau de verrouillage à adopter sa configuration de verrouillage par retour élastique après l'insertion du tube dans l'embout, la ou les lamelles de liaison flexibles présentent avantageusement une conformation apte à augmenter localement leur flexibilité.

De préférence, la pièce mixte est réalisée en matière plastique.

L'invention sera bien comprise et ses avantages apparaîtront mieux à la lecture de la description détaillée qui suit, de modes de réalisation donnés à titres d'exemples non limitatifs. La description se réfère aux dessins annexés sur lesquels :
- la figure 1 montre une connexion comprenant un embout selon l'invention en coupe axiale, selon un premier mode de réalisation,
- la figure 2 est également une coupe axiale, prise selon la ligne II-II de la figure 1,
- les figures 3 et 4 sont deux vues en coupe transversale selon la ligne III-III de la figure 1, montrant respectivement les configurations de verrouillage et de déverrouillage de l'organe de verrouillage,
- la figure 5 est une vue extérieure selon la flèche V de la figure 1,
- les figures 6 et 7 sont deux vues en perspective de la pièce de verrouillage et de blocage du premier mode de réalisation,
- la figure 8 est une vue analogue à la figure 1, montrant une première variante de l'embout selon le premier mode de réalisation,
- la figure 9 est une coupe axiale selon la ligne IX-IX de la figure 8,
- la figure 10 est une vue en coupe axiale correspondant à celle de la figure 2, montrant une deuxième variante du premier mode de réalisation,
- la figure 11 est une perspective de la pièce mixte de la variante de la figure 10, prise selon la flèche XI de la figure 10,
- la figure 12 est une vue en coupe axiale correspondant à celle de la figure 2, illustrant un deuxième mode de réalisation de l'invention,
- la figure 13 est une vue en coupe axiale selon la ligne XIII-XIII de la figure 12,
- la figure 14 est une vue en perspective de la pièce mixte du deuxième mode de réalisation des figures 12 et 13, prise selon la flèche XIV de la figure 13,
- la figure 15 est une perspective coupée de la même pièce dans le plan XV de la figure 14,
- la figure 16 est une vue en coupe axiale correspondant à celle de la figure 2, illustrant un troisième mode de réalisation de l'invention,
- la figure 17 est une vue en perspective de la pièce mixte de la figure 16, prise selon la flèche XVII de cette figure 16, et
- la figure 18 est une perspective coupée selon le plan XVIII de la figure 17.

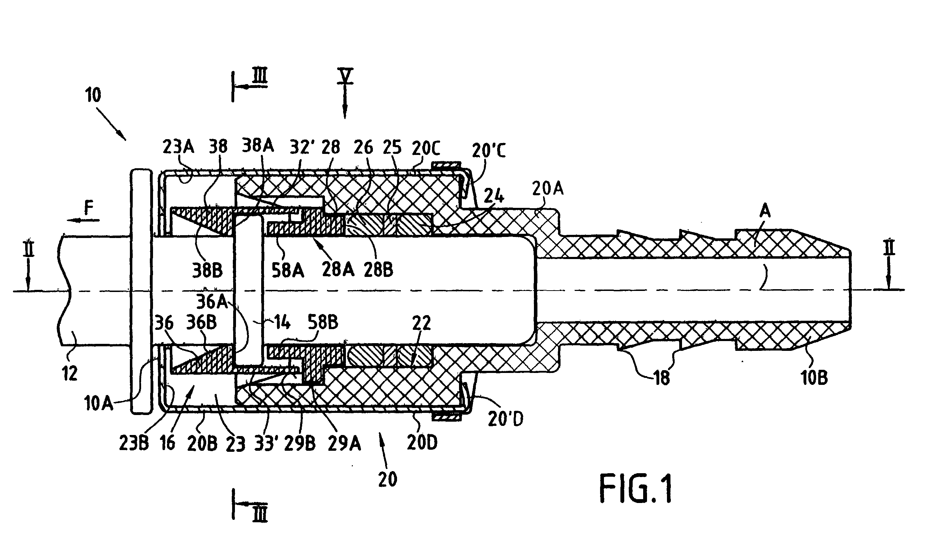

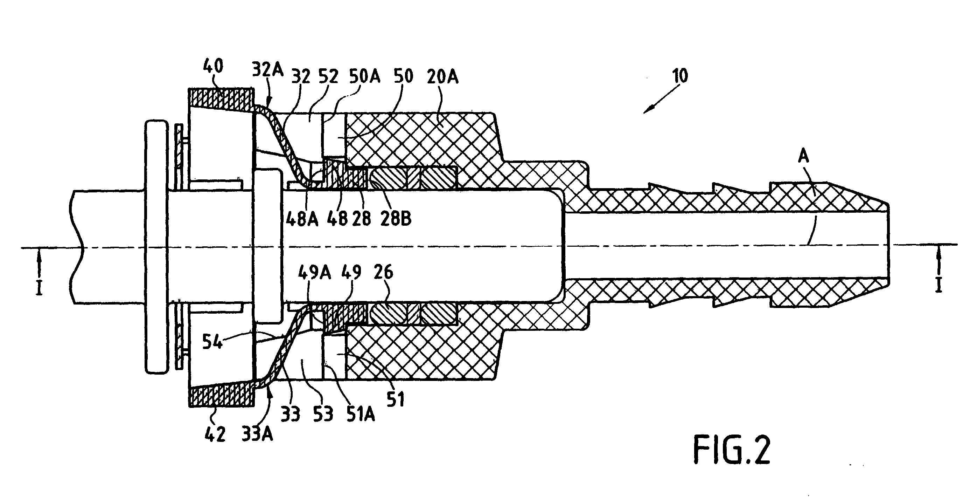

Sur les figures 1 et 2, on voit qu'un tube 12 est inséré dans l'embout 10. Ce tube présente un bourrelet 14 en saillie radiale qui permet de verrouiller le tube dans l'embout grâce à un anneau de verrouillage 16. Un tuyau (non représenté) peut être raccordé à l'extrémité 10B de l'embout 10 opposée à son entrée 10A dans laquelle est inséré le tube 12. A cet effet, l'extrémité 10B de l'embout peut être équipée de tous moyens de fixation et de connexion tels que des indentations 18 en sapin.

L'embout de connexion rapide sert donc à raccorder deux tubes ou tuyaux dans lesquels circule un fluide, par exemple le carburant d'alimentation du moteur d'un véhicule.

L'embout 10 comporte un corps 20 qui présente une cavité interne ayant une première partie 22 dans laquelle sont disposés des moyens d'étanchéité qui, dans l'exemple représenté, comportent deux joints annulaires 24 et 26 séparés par une rondelle 25. De manière générale, on considérera que les moyens d'étanchéité comprennent au moins un joint disposé dans la première partie de la cavité. Cette dernière comporte une deuxième partie 23 qui est située entre la première partie 22 et l'entrée 10A de l'embout.

Les moyens d'étanchéité sont maintenus en place dans la première partie de la cavité par une bague de blocage 28 en forme d'anneau fermé et par un épaulement opposé à cette bague.

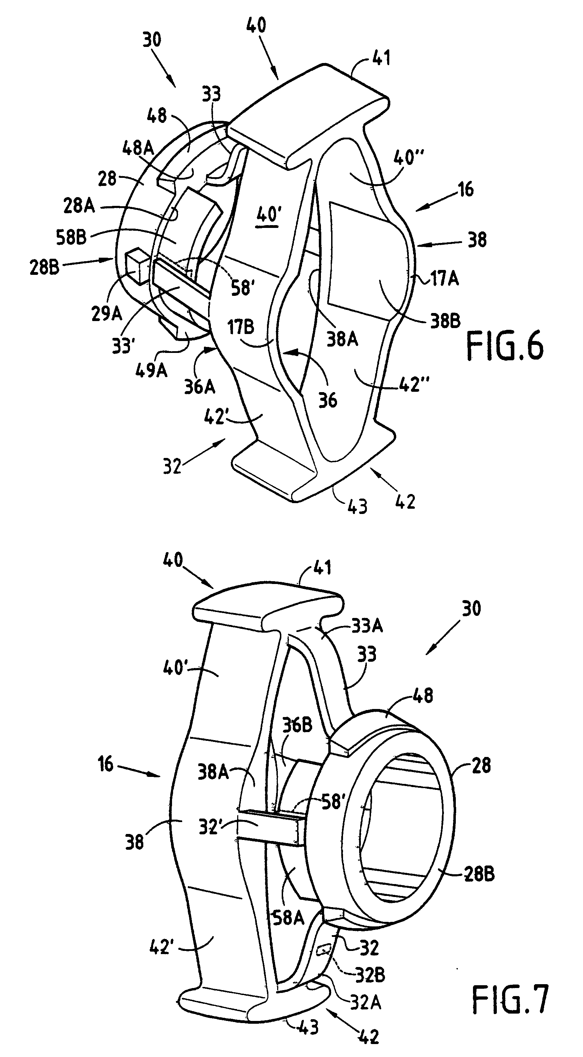

En fait, l'anneau de verrouillage 16 et la bague de blocage 28 sont deux parties d'une même pièce 30, dénommée "pièce mixte" (représentée en perspective sur la figure 6). Dans la pièce 30, l'anneau 16 et la bague 18 sont reliés par au moins une lamelle de liaison flexible. Dans l'exemple représenté, deux lamelles 32 et 33 diamétralement opposées sont présentes.

L'anneau de verrouillage 16 comporte, sur son profil fermé deux zones de verrouillage 36 et 38 qui coopèrent avec le bourrelet 14 du tube pour verrouiller ce dernier dans l'embout.

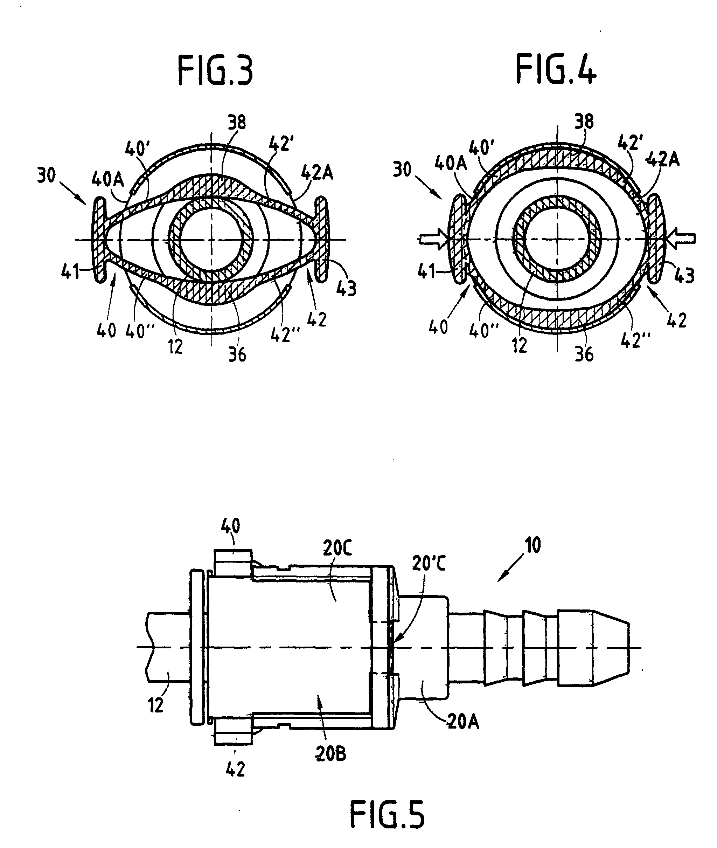

L'anneau de verrouillage peut adopter une configuration de verrouillage représentée sur les figures 1 à 3, dans laquelle les zones de verrouillage 36 et 38 coopèrent effectivement avec le bourrelet 14 du tube. Il peut également présenter une configuration de déverrouillage, visible sur la figure 4, dans laquelle les zones de verrouillage 36 et 38 sont écartées élastiquement d'une manière suffisante pour permettre le passage du bourrelet 14 entre elles.

Pour permettre le passage de l'anneau 16 de sa configuration de verrouillage à sa configuration de déverrouillage, cet anneau comporte deux zones de manipulation 40 et 42 qui sont constituées par des pontets diamétralement opposés, les zones de verrouillage étant également diamétralement opposées et décalées d'un quart de tour par rapport aux pontets. Ces damiers font radialement saillie en dehors du corps de l'embout à travers deux ouvertures, respectivement 40A et 42A de la paroi de ce corps. On comprend qu'il suffit d'actionner manuellement les pontets 40 et 42 pour les rapprocher l'un de l'autre et tendre ainsi à écarter l'une de l'autre les zones de verrouillage 36 et 38, pour parvenir dans la configuration de la figure 4. Pour faciliter leur manipulation, les pontets 40 et 42 sont pourvus de bavettes transversales, respectivement 41 et 43 (figure 4). L'anneau de verrouillage étant élastique, il revient naturellement en configuration de verrouillage après cette manipulation.

L'anneau de verrouillage 16 est retenu dans le corps 20 de l'embout, à l'encontre d'un arrachement (dans le sens F indiqué sur la figure 1), par des moyens de retenue avec lesquels il coopère directement. Comme on le voit sur la figure 1, la paroi de la cavité interne comprend une portion axiale 23A à laquelle est raccordé un élément de paroi radiale 23B qui s'étend, à partir de la paroi axiale 23A, vers l'axe A de l'embout et qui est disposé au voisinage de l'extrémité libre (l'entrée 10A) de l'embout. L'anneau de verrouillage 16 coopère en butée contre cet élément de paroi radiale 23B.

En fait, dans l'exemple représenté sur les figures 1 à 5, le corps 20 de l'embout comprend un premier élément tubulaire 20A à l'intérieur duquel est ménagée la première partie 22 de la cavité interne, ainsi qu'un deuxième élément tubulaire 20B, qui est fixé sur le premier élément tubulaire 20A et qui délimite la deuxième partie 23 de la cavité, l'extrémité libre de ce deuxième élément tubulaire formant l'entrée 10A de l'embout. Ce deuxième élément tubulaire 20B comprend, formés en une seule pièce, l'élément de paroi axiale 23A et l'élément de paroi radiale 23B.

Le deuxième élément tubulaire 20B s'étend au-delà de l'entrée du premier élément tubulaire 20A pour ménager la deuxième partie 23 de la cavité. Il est fixé audit premier élément tubulaire 20A par des portions axiales de cylindre 20C et 20D qui s'étendent vers l'arrière de l'embout, dans des renfoncements ménagés sur la face cylindrique externe de l'élément 20A. A leurs extrémités arrière, ces portions de cylindre viennent en butée contre les parois arrière des renfoncements et présentent des pattes de prolongement 20'C et 20'D qui passent à travers les fentes desdites parois pour venir se replier sur un épaulement de l'élément 20A et bloquer ainsi l'élément 20B sur ce dernier.

En fait, le deuxième élément tubulaire 20B est constitué par la paroi radiale 23B (qui forme un disque percé pour ménager l'entrée de l'embout) et par les deux portions de cylindre 20C et 20D qui s'étendent vers l'arrière à partir de la périphérie radiale externe de la paroi 23B.

Les régions de la bague de verrouillage 16 qui viennent en butée contre l'élément de paroi radiale d'entrée 23B comprennent des portions 17A et 17B de la face frontale de cette bague qui se trouvent directement dans le prolongement axial des zones de verrouillage 36 et 38. Comme on le voit sur la figure 6, ces zones 17A et 17B présentent une épaisseur de matériau plus grande que l'épaisseur du matériau dans les autres régions circonférentielles de la bague. Cette épaisseur va en augmentant vers l'arrière de l'embout (vers son extrémité 10B) puisqu'elles sont munies de rampes 36B, 38B destinées à faciliter l'introduction du tube 12 dans l'embout.

La bague de blocage 28 est quant à elle directement maintenue en place dans le corps de l'embout. A cet effet, elle présente des premiers moyens de maintien 48, 49 qui sont situés au voisinage de son extrémité 28A tournée vers l'entrée 10A de l'embout, tandis que le corps de l'embout comprend des deuxièmes moyens de maintien 50 et 51 qui coopèrent avec ces premiers moyens de maintien 48 et 49 pour maintenir la bague de blocage en place dans le corps 20. On voit que, dans cette position, l'extrémité 28B de la bague qui est opposée à l'entrée 10A de l'embout coopère directement avec le joint d'étanchéité 26.

Les deuxièmes moyens de maintien peuvent comprendre au moins une surface de maintien qui est située dans une zone de la cavité intermédiaire entre ses premières et deuxièmes parties 22 et 23 et qui est tournée à l'opposé de l'entrée 10A de l'embout, tandis que la bague de blocage 28 présente au moins une surface de blocage apte à coopérer avec cette surface de maintien

Plus précisément, la surface de maintien peut être formée par une face radiale d'un dégagement ménagé dans cette zone intermédiaire, tandis que la surface de blocage est formée sur une saillie radiale de la bague 28 susceptible d'être insérée dans ce dégagement. Dans l'exemple représenté, deux dégagements diamétralement opposés 50 et 51 sont ménagés dans la paroi de la zone intermédiaire de la cavité, tandis que deux saillies 48 et 49 diamétralement opposées sont formées sur la bague 28. Plus précisément, les deux saillies 48 et 49 forment, sur leurs faces frontales 48A et 49A, deux surfaces de blocage qui coopèrent avec deux surfaces de maintien elles-mêmes formées par les bords avant 50A et 51A des dégagements 50 et 51.

On peut par exemple faire en sorte que la bague de blocage 28 soit légèrement déformable élastiquement radialement. Ainsi, les saillies 48 et 49 peuvent être mises en place par encliquetage dans les dégagements 50 et 51, la partie de la paroi de la cavité immédiatement située à l'avant des dégagements 50 et 51, de même que les saillies 48 et 49, présentant à cet effet des rampes 54 légèrement inclinées par rapport à l'axe A de l'embout.

Dans l'exemple représenté, les dégagements 50 et 51 sont formés par des fentes transversales pratiquées dans la paroi axiale de l'élément tubulaire 20A.

Pour s'assurer que la bague de blocage est mise en place correctement, dans une position dans laquelle son maintien est effectivement assuré, on peut prévoir un détrompeur de position comprenant par exemple un ergot 29A faisant radialement saillie sur la bague de blocage 28 et un dégagement 29B ménagé dans la paroi de la zone intermédiaire de la cavité. Sur les figures 1 et 2, on remarque que deux dégagements 29B sont présents, ce qui est lié au fait que la position correcte de la bague est assurée à un demi-tour près, les saillies 48 et 49 étant diamétralement opposées. Le fait que la bague de blocage 28 a la forme d'un anneau fermé et est directement maintenue par rapport au corps de l'embout permet à cette bague de directement coopérer avec le joint 26, sans qu'une rondelle intermédiaire soit nécessaire.

Pour faciliter le calage du tube 12 à l'intérieur de l'embout, on peut prolonger axialement la bague de blocage 28 vers l'anneau de verrouillage 16 par au moins une portion de paroi cylindrique séparée de la ou des lamelles de liaison flexibles. Plus précisément, comme on le voit en particulier sur les figures 1, 6 et 7, la bague de blocage présente deux portions de paroi cylindrique diamétralement opposées 58A et 58B qui s'étendent entre les lamelles de liaison flexibles 32, 33 et ne sont pas directement raccordées à ces dernières pour éviter de gêner leur flexibilité.

Les zones de verrouillage 36 et 38 de la bague de verrouillage 16 portent des surfaces de verrouillage, respectivement 36A et 38A, en forme de portions d'épaulements sensiblement radiaux qui sont tournés du côté opposé à l'entrée 10A de l'embout. Ces portions d'épaulements coopèrent ainsi avec la face sensiblement radiale du renflement 14 du tube 12 qui est tournée vers l'entrée de l'embout.

L'anneau de verrouillage 16 présente une forme oblongue en coupe transversale à l'axe A de l'embout. Les deux surfaces de verrouillage 36A et 38A s'étendent dans deux zones de cet anneau qui sont diamétralement opposées, zones dont l'écartement, en position de repos de l'anneau, correspond aux dimensions diamétrales les plus faibles de cet anneau.

Les zones de manipulation 40 et 42 (ou pontets) sont situées dans les régions de l'anneau oblong de verrouillage diamétralement opposées, dont l'écartement correspond au plus grandes dimensions diamétrales de cet anneau. Lorsque la pièce de verrouillage et de blocage est en place dans le corps de l'embout, ces deux pontets 40 et 42 dépassent du corps de l'embout à travers les fentes diamétralement opposées 40A et 42A s ménagées dans la paroi axiale de la cavité interne, dans la deuxième partie 23 de cette dernière. En fait, ces fentes sont simplement ménagées dans des espaces laissés exempts de paroi, au-delà de l'extrémité avant du premier élément tubulaire 20A et entre les portions de cylindre 20C et 20D du deuxième élément tubulaire 20B.

Plus précisément, les zones de manipulation des pontets 40 et 42 sont formées sur les sommets de ces pontets qui ont sensiblement la forme de U ou de V, dont les liaisons aux zones de verrouillage 36 et 38 forment des branches respectivement 40', 40" et 42', 42". Avantageusement, ces branches -sont des portions de l'anneau de verrouillage qui sont courbes et dont la concavité est tournée vers l'intérieur de l'anneau, cette disposition favorisant le caractère élastique des déformations radiales imposées à l'anneau de verrouillage en manipulant ce dernier dans les zones de manipulation 40 et 42.

Dans l'exemple représenté, la pièce 30 comporte deux lamelles de liaison 32 et 33 qui sont diamétralement opposées (elle pourrait toutefois n'en avoir qu'une seule ou en comporter davantage).

Les lamelles 32 et 33 relient les sommets des pontets 40 et 42 à la bague de blocage 28. Elles sont disposées dans des fentes axiales 52 et 53 qui s'étendent entre l'entrée de l'élément 20A et, respectivement les fentes transversales 50 et 51.

L'embout comporte avantageusement des moyens pour s'opposer au recul de l'anneau de verrouillage 16 lors de l'introduction du tube dans l'embout.

En particulier, lorsque peu de lamelles de liaison (par exemple seulement deux) sont présentes, il existe un risque que l'anneau de verrouillage, dans les régions éloignées de ces lamelles, ait tendance à se déformer en reculant légèrement dans l'embout lors de l'introduction du tube. Pour éviter cela, la pièce mixte 30 présente avantageusement au moins une lamelle de positionnement, avantageusement deux lamelles 32' et 33' qui s'étendent vers l'arrière à partir de l'anneau 16 et qui sont susceptibles de venir en buter contre la bague de blocage 28.

Ces lamelles 32' et 33' sont de préférence raccordées à l'anneau 16 dans une région de ce dernier ayant un petit diamètre. Dans l'exemple représenté, elles s'étendent axialement vers l'arrière à partir des parties radiales externes des épaulements 36A et 38A.

On voit que les lamelles 32'et 33' s'étendent contre les portions de parois 58A et 58B. Pour faciliter la fabrication de la pièce 30, on peut réaliser des dégagements 58' (en traits interrompus) ou même des interruptions dans ces portions de parois, dans la région des lamelles 32' et 33'.

De manière alternative, on peut prévoir d'autres moyens que les lamelles 32' et 33' pour éviter le recul de l'anneau 16. Par exemple, les portions de paroi 58A et 58B pourraient être prolongées pour être capables de coopérer en butée avec la face arrière de la bague 16, par exemple avec les épaulements 36A et 38A.

Les lamelles 32 et 33 servent à assurer la liaison entre l'anneau de verrouillage 16 et la bague de blocage 28, ce qui permet de réaliser la pièce de verrouillage et de blocage en une seule pièce et faciliter ainsi la fabrication et le montage de l'embout conforme à l'invention. Pour éviter qu'elles ne gênent la capacité de l'anneau de verrouillage à s'ouvrir élastiquement dans le sens radial pour permettre le déverrouillage de la connexion, elles sont flexibles dans le sens radial et dotées d'une faible résistance à la traction dans le sens axial.

Avantageusement, la ou les lamelles de liaison flexibles présentent une configuration apte à augmenter localement leur flexibilité. On constate déjà sur les figures que l'épaisseur de ces lamelles est relativement faible par rapport à l'épaisseur des autres parties de la pièce 30. On peut faire en sorte que leur épaisseur soit diminuée localement par exemple dans la zone des "charnières" 32A et 33A indiquées sur la figure 2. Comme on l'a indiqué en trait interrompu sur la figure 7, on pourrait également prévoir de pratiquer des ouvertures 32B dans les lamelles de liaison. On pourrait aussi diminuer localement leur largeur par des incisions ou tout autre moyen analogue.

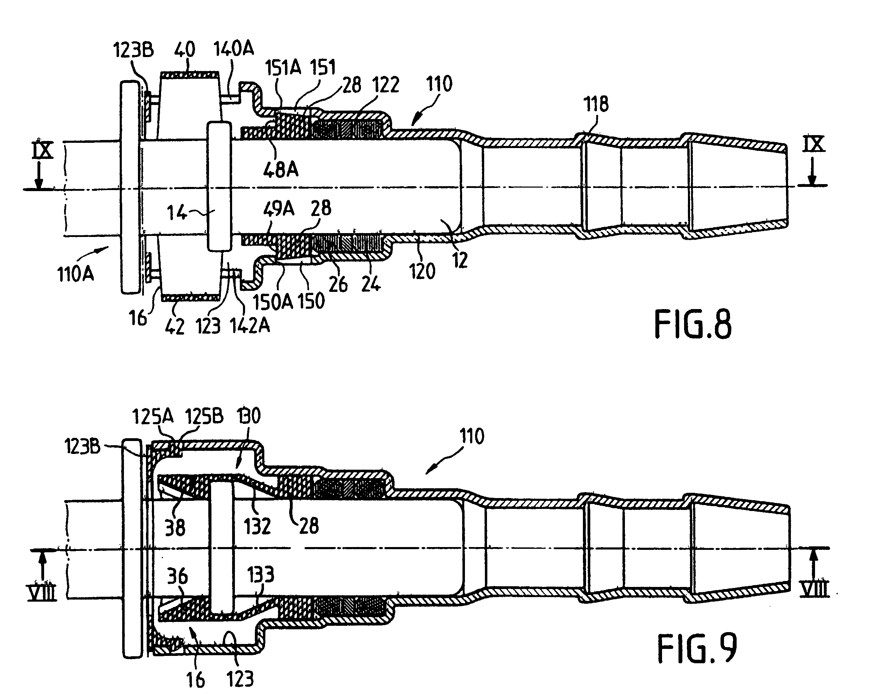

Les figures 8 et 9 montrent une variante de réalisation, sur laquelle la pièce mixte 130 est modifiée dans la mesure où la ou les lamelles de liaison 132 et 133 s'étendent cette fois entre les parties de petit diamètre de l'anneau de. verrouillage 16 (les zones de verrouillage 36 et 38) et la bague de blocage 28. En outre, la pièce 130 est exempte de lamelles de positionnement. Pour le reste, la pièce 130 est globalement analogue à la pièce 30 des figures précédentes.

Les autres modifications apportées dans la variante des figures 8 et 9 par rapport à celle des autres figures concernent le corps de l'embout 110. En effet, toute la partie tubulaire 120 de ce corps est réalisée en une seule pièce tubulaire étagée. Cette pièce présente ainsi des indentations en sapin 118 qui permettent le raccordement d'un tuyau flexible. Dans le sens allant de son extrémité pourvue de ces indentations vers son autre extrémité (l'entrée de l'embout), cette pièce tubulaire 120 présente un premier étagement à l'intérieur duquel est ménagée la première partie 122 de la cavité interne qui contient les joints d'étanchéité 24 et 26.

Elle comporte ensuite une partie intermédiaire de diamètre encore légèrement augmenté sur laquelle sont ménagées deux fentes 150 et 151 diamétralement opposées qui, par leurs bords 150A et 151A situés du côté de l'entrée 110A de l'embout, forment des surfaces de maintien pour les surfaces de blocage 48A et 49A de la bague de blocage 28. Ainsi, dans cette variante, les dégagements 50 et 51 évoqués précédemment sont formés dans les fentes 150 et 151. Toujours dans le sens allant vers l'entrée de l'embout, la pièce tubulaire 120 présente ensuite une deuxième portion étagée à l'intérieur de laquelle est formée la deuxième partie 123 de la cavité. Sur cette deuxième partie sont ménagées les fentes 140A et 142A à travers lesquelles dépassent les pontets 40 et 42 de l'anneau de verrouillage 16. Ce deuxième étagement, de diamètre supérieur à celui du premier étagement, présente un diamètre sensiblement constant jusqu'à l'entrée de l'embout.

Ainsi, dans cette variante, l'élément de paroi radiale avec lequel coopère l'anneau de verrouillage pour empêcher l'arrachement de cet anneau en dehors de l'embout est formé par une pièce rapportée 123B ayant la forme d'un anneau ménageant une ouverture centrale adaptée à permettre le passage du tube avec son renflement 14, cet anneau 123B étant muni de pattes d'accrochage 125A qui s'engagent par encliquetage dans des ouvertures 125B ménagées sur la paroi axiale du deuxième étagement de l'élément tubulaire 120.

Pour l'assemblage des différentes pièces de l'embout, on met d'abord en place le ou les joints jusque dans le premier étagement axial de l'élément tubulaire 120, puis on dispose la pièce de verrouillage et de blocage en l'engageant axialement par l'extrémité libre de l'élément tubulaire situé du-côté de l'entrée 110A de l'embout. Seulement ensuite, on vient mettre en place la pièce 123B.

Bien entendu, quelle que soit la variante retenue, l'élément tubulaire peut être rectiligne sur toute sa longueur ou présenter une portion coudée. D'autres moyens de raccordement à un tuyau que les indentations en sapin peuvent être prévus, par exemple un sertissage.

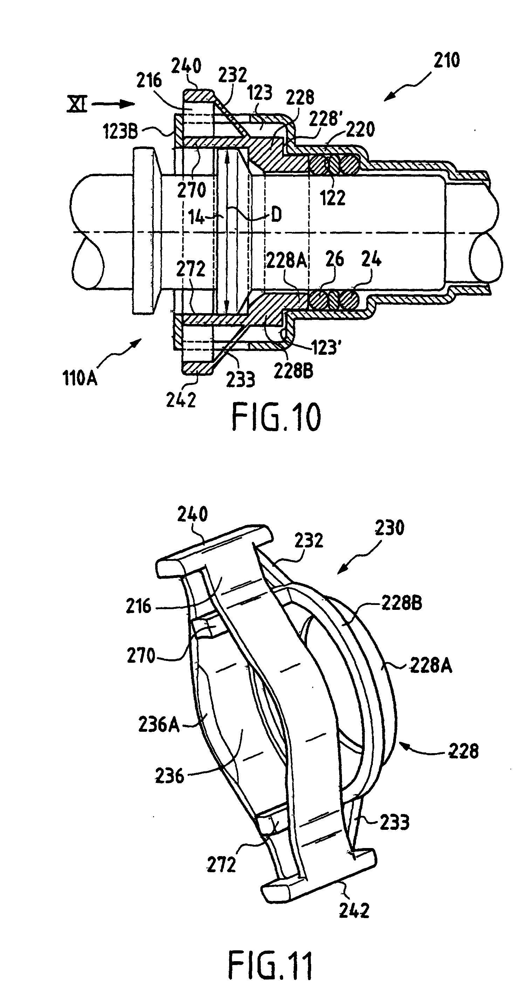

Dans la variante de la figure 10, le corps 220 de l'embout 210 est globalement analogue à celui des figures 8 et 9. La pièce mixte 230 comporte un anneau de verrouillage 216 globalement analogue à l'anneau de verrouillage 16 de la pièce 30. On a indiqué ses deux zones de déverrouillage constituées par des pontets 240 et 242, ainsi que ses deux zones de verrouillage 236 et 238, la rampe d'introduction 236A de la zone de verrouillage 236 étant également indiquée.

L'anneau de verrouillage 216 est relié à la bague de blocage 228 par deux lamelles de liaison flexibles, 232 et 233 qui s'étendent sensiblement dans la direction axiale et raccordent les sommets des pontets 240 et 242 à la bague de blocage. Du côté opposé à l'anneau de verrouillage 216, la bague de blocage présente une portée cylindrique 228A qui coopère avec la paroi cylindrique de la première partie 122 de la cavité interne du corps de l'embout, dans laquelle sont logés les joints d'étanchéité 24 et 26. La deuxième partie 123 de la cavité interne du corps de l'embout est raccordée à la première partie par un épaulement 123'. La deuxième partie 228B de la bague de blocage qui est séparée de la portée cylindrique 228A par un épaulement 228', le diamètre extérieur de la partie 228B étant supérieur à celui de la partie 228A.

L'entrée 110A du corps de l'embout est dotée d'un élément de paroi radiale d'entrée 123B. Comme dans le mode de réalisation des figures 8 et 9, l'anneau de verrouillage 216 est retenu contre un arrachement en dehors du corps de l'embout par coopération avec cet élément de paroi radiale.

La portée cylindrique 228A de la bague 228 peut être engagée à force dans la première partie 122 de la cavité du corps de l'embout. De plus, pour caler axialement la bague 228, celle-ci comporte deux pattes rigides, respectivement 270 et 272, qui s'étendent chacune, à partir de la partie 228B de la bague vers l'entrée de l'embout. La patte 270 passe sous le pontet 240. tandis que la patte 272 passe sous le pontet 242. Ces pattes sont situées dans le dégagement formé dans la deuxième partie 123 du corps de l'embout et l'on voit qu'elles sont espacées d'une distance D qui est sensiblement égale au diamètre extérieur du bourrelet 14 du tube. Les extrémités libres de ces pattes opposées à la bague 228 coopèrent donc avec l'élément de paroi radiale 123B, de sorte que la bague 228 est parfaitement calée à l'intérieur du corps de l'embout.

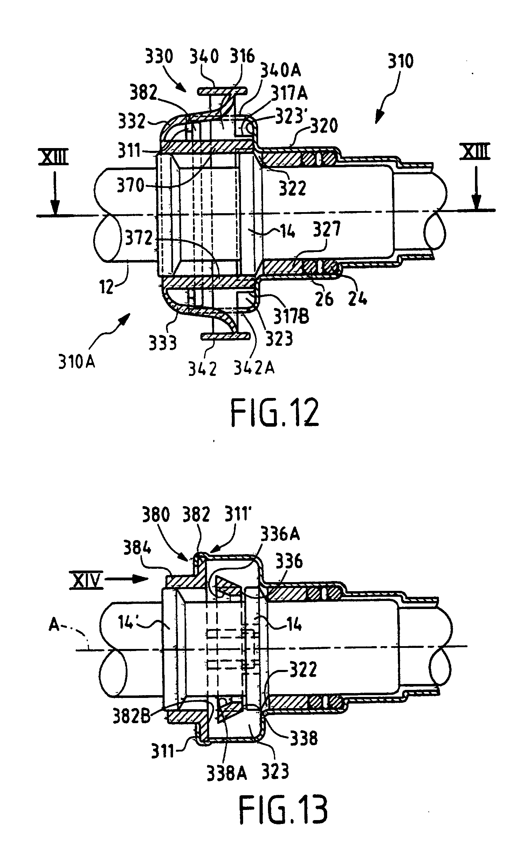

En référence aux figures 12 à 15 on décrit maintenant le deuxième mode de réalisation de l'invention. Le tube 12 est engagé à l'intérieur du corps 320 de l'embout 310. Des moyens d'étanchéité comprenant les joints 24 et 26 sont logés dans la première partie 322 de la cavité interne du corps 320, et sont maintenus en place dans cette première partie par une bague de blocage 327 constituée par un anneau distinct de la pièce mixte 330.

En effet, dans le deuxième mode de réalisation, la pièce mixte est essentiellement constituée par l'anneau de verrouillage 316 et par une bague d'entrée 380. L'anneau de verrouillage 316 est, en lui-même, globalement analogue aux anneaux 16 et 216 précédemment décrits. On reconnaît en effet les pontets de déverrouillage 340 et 342 ainsi que les zones de verrouillage 336 et 338, ces zones étant munies de rampes d'entrée respectivement 336A et 338A. Les zones de verrouillage sont contenues dans la deuxième partie 323 du corps de l'embout, tandis que les pontets de déverrouillage 340 et 342 dépassent à travers deux fentes diamétralement opposées, respectivement 340A et 342A, ménagées dans la paroi du corps de l'embout.

La bague d'entrée 380 est disposée à l'entrée 310A du corps 320 de l'embout. L'anneau de verrouillage 316 est relié à cette bague par des lamelles de liaison flexibles 332 et 333 qui, dans l'exemple avantageux représenté, s'étendent sensiblement axialement et sont raccordées à l'anneau de verrouillage des pontets 340 et 342. Les fentes 340A et 342A de la paroi du corps de l'embout précédemment citées s'étendent jusqu'à l'entrée 310A de ce dernier pour permettre le passage des lamelles 332 et 333.

La bague 380 présente des moyens formant collerette 382 coopérant avec la paroi du corps de l'embout, à l'entrée de ce dernier. Ces moyens formant collerette sont en fait formés par une collerette interrompue dans la région des lamelles 332 et 333 pour former des dégagements pour ces lamelles.

Comme on le voit sur les figures 12 et 13, la paroi du corps de l'embout présente, à l'entrée 310A de ce dernier, un repli 311 qui est rabattu contre la face avant 382A (tournée du côté de l'entrée de l'embout) de la collerette 382. Plus précisément, du fait de la présence des fentes 340A et 342A précédemment évoquées, ce repli 311 est formé en deux parties s'étendant chacune sensiblement sur un demi-cercle et coopérant respectivement avec chacune des deux parties de la collerette 382.

Comme le voit sur la figure 13, il est possible de réaliser ce repli 311 pratiquement de la manière d'un sertissage en le ramenant légèrement (en 311') contre la face arrière de la collerette 382. De ce fait la bague 380 est parfaitement calée par rapport au corps de l'embout sans aucunement gêner les sollicitations de verrouillage et de déverrouillage de l'anneau 316.

Toutefois, comme on le voit mieux sur la figure 12, on peut également prévoir, pour caler la bague 380 contre un enfoncement de cette bague à l'intérieur du corps de l'embout à l'aide de deux pattes de calage 370 et 372, solidaires de la bague 380 et s'étendant, à partir de cette dernière, dans le sens allant à l'opposé de l'entrée de l'embout. Ces deux pattes s'entendent chacune sous un pontet, respectivement 340 et 342 de l'anneau de verrouillage. Leurs extrémités libres opposées à l'entrée de l'embout coopèrent en butée avec un élément de paroi interne 323' qui est situé derrière l'anneau de verrouillage 316 dans le sens allant de l'entrée du corps de l'embout vers la première partie 322 de sa cavité interne. En l'espèce, cet élément de paroi interne est tout simplement constitué par un épaulement qui raccorde la première partie 322 de la cavité à la deuxième partie 323, de plus grand diamètre, de cette cavité.

Du fait de la présence des pattes de calage, la bague 380 peut être parfaitement maintenue à l'intérieur du corps de l'embout par la coopération en butée de ses pattes avec l'élément de paroi interne 323', associé à un simple rabat de l'extrémité avant 311 du corps de l'embout contre la face avant 382A de la collerette 382. Dans ce cas, le sertissage 311 précité n'est pas toujours nécessaire.

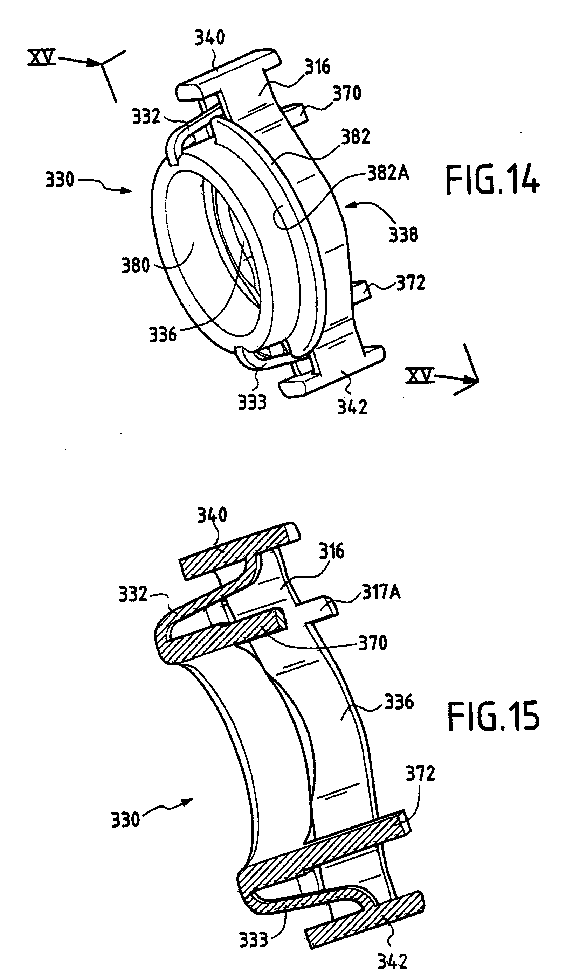

L'anneau de verrouillage 316 est également muni de moyens s'opposant à son recul à l'intérieur de corps de l'embout lors de l'introduction du tube. En l'espèce, on voit que cet anneau comporte, au voisinage des zones de verrouillage 336 et 338, des picots de calage 317A et 317B qui, comme les pattes 370 et 372, sont disposés de telle sorte que leurs extrémités libres opposées à l'entrée de l'embout coopèrent en butée avec l'élément de paroi interne 323' précité. Le picot de calage 317A est bien visible dans la zone d'arrachement de la patte 370 de la figure 15. En l'espèce, on a prévu deux picots de calage 317A et 317B respectivement situés entre la zone de verrouillage 336 et chacun des deux pontets 340 et 342. Bien entendu, deux picots analogues peuvent être situés de part et d'autre de la zone de verrouillage 338.

La bague rigide d'entrée 380 présente une portion cylindrique 384 qui s'étend au-delà de l'entrée 310A du corps de l'embout à partir des moyens formant collerette 382. La périphérie interne de cette portion 384 forme une portée cylindrique qui concourt au guidage du tube lors de son introduction dans l'embout. Pour caler le tube dans un sens transversal à l'axe A de l'embout, ce tube présente d'ailleurs un deuxième bourrelet 14' de dimension analogue au bourrelet 14, coopérant avec cette portée cylindrique.

Pour faciliter la compréhension des figures 12 et 13, on a représenté sur ces figures un léger jeu entre les zones de verrouillage de l'anneau 316 et le bourrelet 14, de même que l'on a représenté un jeu entre cet anneau et la face arrière 382B de la bague 380. Cette face arrière forme un élément de paroi radiale d'entrée qui, considéré à partir de la portion axiale du corps de l'embout qui délimite la deuxième partie 323 de la cavité inteme, s'étend vers l'axe A de l'embout. L'anneau de verrouillage 316 peut donc coopérer avec la face arrière 382B de la bague 380 pour être retenu contre son arrachement en dehors du corps de l'embout.

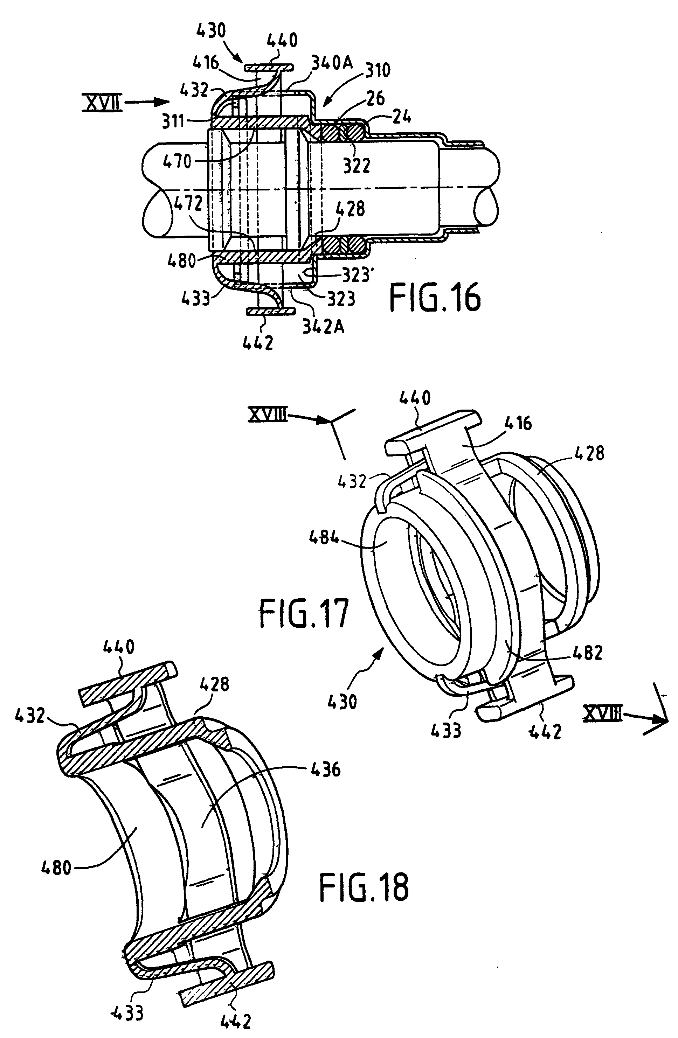

En référence aux figures 16 à 18, on décrit maintenant un troisième mode de réalisation de l'invention. Sur ces figures, le corps de l'embout 310 est analogue à celui des figures 12 et 13. La pièce mixte 440 comporte quant à elle l'anneau de verrouillage 416, une première bague rigide 428 qui forme une bague de blocage des joints d'étanchéité 24 et 26, et une deuxième bague rigide qui forme une bague rigide d'entrée 480. Cette bague rigide d'entrée est analogue à la bague 380 des figures 12 à 15. La collerette 482 et la portion cylindrique 484 sont en effet respectivement analogues aux élément 382 et 384 desdites figures. L'anneau de verrouillage 416 est, quant à lui, analogue à l'anneau 316 des figures 12 à 15 et il est raccordé à la bague 480 par des lamelles flexibles 432 et 433 qui relient respectivement les pontets 440 et 442 à la région de l'extrémité libre de la portion cylindrique 484.

Le mode de réalisation des figures 16 à 18 diffère de celui des figures 12 à 15 par la présence, sur la pièce mixte 430, de la bague de blocage 428 dont la forme est globalement analogue à celle de la bague de blocage du premier mode de réalisation, en particulier à celle de la bague 228 des figures 10 et 11. Les deux bagues rigides 480 et 428 sont reliées entre elles par deux pattes de liaison rigides, respectivement 470 et 472, qui passent sous les pontets 440 et 442. Ainsi, par rapport au mode de réalisation des figures 12 à 15, celui des figures 16 à 18 consiste à ajouter à la pièce mixte la bague de blocage 428, disposée aux extrémités des pattes 370 et 372. On voit, sur la figure 18, l'une des zones de verrouillage 436.

Dans le troisième mode de réalisation, on réalise, en une seule pièce monobloc, la fonction de verrouillage et de déverrouillage, la fonction de blocage des joints, et la fonction de délimitation de l'entrée de l'embout.

Dans l'exemple représenté, les lamelles flexibles de liaison relient l'anneau de verrouillage 416 à la bague rigide d'entrée 480. De manière alternative ou complémentaire, on pourrait prévoir des lamelles de liaison reliant l'anneau de verrouillage 416 à la bague de blocage 428. Par exemple, une variante du troisième mode de réalisation consisterait à réaliser, en une seule pièce avec les extrémités des pattes 270 et 272 de la figure 11, une bague d'entrée analogue à la bague 480. Dans ce cas, la collerette pourrait éventuellement être continue.

Avantageusement, la pièce mixte 30, 130, 230, 330 ou 430 est réalisée en matière plastique. Il s'agit par exemple d'un polyamide résistant aux températures que l'on trouve habituellement dans la ligne d'alimentation en carburant d'un véhicule. Selon les applications souhaitées, on peut même choisir un polyamide résistant à des températures assez élevées de l'ordre de 120 à 150°C. Le corps de l'embout peut quant à lui être réalisé en métal ou en matière plastique. Il peut également s'agir d'un polyamide, renforcé de fibres de verre si nécessaire.

## Revendications

1. Embout de connexion rapide (10 ; 110 ; 210 ; 310) susceptible d'être emmanché sur un tube (12) rigide qui présente un bourrelet (14) en saillie radiale distant de son extrémité libre, l'embout comprenant un corps (20 ; 120 ; 220 ; 320) qui présente une cavité interne ayant une première partie (22 ; 122 ; 322) susceptible de contenir des moyens d'étanchéité (24, 26) et une deuxième partie (23 ; 123 ; 323) située entre la première partie (22 ; 122 ; 322) de ladite cavité et l'entrée (10A ; 110A ; 310A) du corps de l'embout, un anneau de verrouillage (16 ; 216 ; 316 ; 416) étant disposé dans cette deuxième partie et étant retenu contre un arrachement hors du corps de l'embout par des moyens de retenue (23B ; 123B ; 382 : 482), l'anneau de verrouillage (16 ; 216 ; 316 ; 416) présentant un profil fermé et comportant au moins une zone de verrouillage (36, 38 ; 236, 238 ; 336, 338) située dans une région dudit anneau dans laquelle le rayon de cet anneau est minimum, ledit anneau de verrouillage étant susceptible d'adopter une configuration de verrouillage dans laquelle ladite zone de verrouillage est apte à coopérer avec le bourrelet (14) du tube (12) pour maintenir ce dernier en place dans l'embout (10 ; 110 ; 210 ; 310) et une configuration de déverrouillage dans laquelle la zone de verrouillage est déplacée élastiquement par déformation de l'anneau pour être située sur un rayon au moins égal au rayon du bourrelet (14) du tube (12), la paroi de la cavité interne présentant, dans sa portion axiale, au moins une fente (40A, 42A ; 140A, 142A ; 340A, 342A) débouchant dans la deuxième partie de cette cavité, fente à travers laquelle dépasse une zone (40, 42 ; 240, 242 ; 340, 342 ; 440, 442) de l'anneau de verrouillage (16 ; 216 ; 316 ; 416) située dans une région dudit anneau dans laquelle le rayon de cet anneau est maximal, cette zone constituant une zone de manipulation et étant susceptible d'être manipulée en étant rapprochée de l'axe de l'embout pour déplacer la zone de verrouillage et solliciter ainsi l'anneau de verrouillage de sa configuration de verrouillage dans sa configuration de déverrouillage,
**caractérisé en ce que** l'anneau de verrouillage (16 ; 216 ; 316 ; 416) est relié par au moins une lamelle de liaison flexible (32, 33 ; 132, 133 ; 232, 233 ; 432, 433) à au moins une bague rigide (28 ; 228 ; 380 ; 428, 480), ledit anneau et ladite bague étant situés l'un à côté de l'autre dans la direction axiale, l'ensemble comprenant l'anneau de verrouillage, la bague rigide et la ou les lamelles de liaison formant une seule pièce, dénommée "pièce mixte" (30 ; 130 ; 230 ; 330 ; 430), **en ce que** la bague rigide (28 ; 228 ; 380 ; 428, 480) est munie de premiers moyens de maintien (48A, 49A ; 270, 272 ; 370, 372 ; 470, 472) aptes à coopérer avec des deuxièmes moyens de maintien (50A, 51A ; 150A, 151A ; 123B ; 382B ; 480) solidaires du corps de l'embout pour caler ladite bague par rapport au corps de l'embout indépendamment des sollicitations exercées sur l'anneau de verrouillage (16 ; 216 ; 316 ; 416) et **en ce que** la bague rigide est apte à assurer une fonction distincte de la fonction de verrouillage qui est assurée par l'anneau de verrouillage.

2. Embout selon la revendication 1, **caractérisé en ce que** l'anneau de verrouillage comprend deux zones de verrouillage (36, 38 ; 236, 238 ; 336, 338 ; 436) espacées angulairement sur le profil fermé de cet anneau.

3. Embout selon la revendication 1 ou 2, **caractérisé en ce que** la paroi de la cavité interne présente, dans sa portion axiale, deux fentes (40A, 42A ; 140A, 142A ; 340A, 342A) diamétralement opposées débouchant dans la deuxième partie de cette cavité, fentes à travers lesquelles dépassent respectivement deux zones de l'anneau fermé de verrouillage dont l'écartement correspond aux plus grandes dimensions diamétrales dudit anneau, ces deux zones constituant des zones de manipulation (40, 42 ; 240, 242 ; 340, 342 ; 440, 442) et étant susceptibles d'être manipulées en étant rapprochées l'une de l'autre pour solliciter l'anneau de verrouillage de sa configuration de verrouillage dans sa configuration de déverrouillage.

4. Embout selon l'une quelconque des revendications 1 à 3, **caractérisé en ce qu'**il comprend au moins une lamelle de liaison flexible (32, 33 ; 132, 133 ; 232, 233 ; 332, 333 ; 432, 433) reliant la ou les zones de manipulation (40, 42 ; 240, 242 ; 340, 342 ; 440, 442) de l'anneau de verrouillage à la bague rigide.

5. Embout selon l'une quelconque des revendication 1 à 4, **caractérisé en ce qu'**il comporte au moins une lamelle de liaison flexible (132, 133) reliant une partie radiale externe d'une zone de verrouillage (36, 38) de l'anneau de verrouillage à la bague rigide.

6. Embout selon l'une quelconque des revendications 1 à 5, **caractérisé en ce que** la ou les lamelles de liaison flexibles (32, 33) présentent une conformation (32B) apte à augmenter localement leur flexibilité.

7. Embout selon l'une quelconque des revendications 1 à 6, **caractérisé en ce qu'**il comporte des moyens (32', 33' ; 317A, 317B) pour s'opposer au recul de l'anneau de verrouillage (16 ; 316) lors de l'introduction du tube (12) dans l'embout.

8. Embout selon l'une quelconque des revendications 1 à 7, **caractérisé en ce que** la pièce mixte (30 ; 130 ; 230 ; 330 ; 430) comprend une bague rigide constituée par une bague de blocage (28 ; 228 ; 428) qui coopère directement avec un joint d'étanchéité appartenant aux moyens d'étanchéité (24, 26) pour maintenir ces derniers en place dans la première partie (22 ; 122 ; 322) de la cavité interne, ladite bague de blocage étant située derrière l'anneau de verrouillage (16 ; 216 ; 416) dans le sens allant de l'entrée (10A ; 110A) de l'embout vers ladite première partie de la cavité interne.

9. Embout selon la revendication 8, **caractérisé en ce qu'**il comprend un élément de paroi radiale d'entrée (23B ; 123B ; 382 ; 482), solidaire du corps (20 ; 120 ; 320) de l'embout et situé à l'entrée de ce dernier, ledit élément s'étendant, à partir d'une portion axiale de la paroi du corps de l'embout, vers l'axe (A) dudit embout, et **en ce que** la bague rigide de blocage (228 ; 428) comporte au moins une patte rigide (270, 272 ; 470, 472) qui s'étend sous une zone de manipulation (240, 242 ; 440, 442) de l'anneau de verrouillage (216 ; 416), ladite patte rigide coopérant avec ledit élément de paroi radiale pour caler la bague de blocage par rapport au corps de l'embout.

10. Embout selon l'une quelconque des revendications 8 et 9, **caractérisé en ce que** la cavité interne du corps (20 ; 120) de l'embout présente, dans une zone intermédiaire entre ses première et deuxième parties (22, 23), au moins une surface de maintien (50A, 51A; 150A, 151A) pour la bague de blocage (28) tournée à l'opposé de l'entrée (10A ; 110A) de l'embout et **en ce que** ladite bague de blocage présente au moins une surface de blocage (48A, 49A) apte à coopérer avec ladite surface de maintien.

11. Embout selon la revendication 10, **caractérisé en ce que** la surface de maintien (50A, 51A ; 150A, 151A) est formée par une face radiale d'un dégagement (50, 51 ; 150, 151) ménagé dans ladite zone intermédiaire, tandis que la surface de blocage (48A, 49A) est formée sur une saillie radiale (48, 49) de la bague de blocage (28) susceptible d'être insérée dans ce dégagement.

12. Embout selon la revendication 7 et l'une quelconque des revendications 8 à 10, **caractérisé en ce que** la pièce mixte (30) présente au moins une lamelle de positionnement (32', 33') s'étendant vers l'arrière à partir de l'anneau de verrouillage (16) et susceptible de coopérer en butée avec la bague de blocage (28) pour s'opposer au recul de l'anneau de verrouillage (16) lors de l'introduction du tube (12) dans l'embout.

13. Embout selon l'une quelconque des revendications 8 à 12, **caractérisé en ce que** la bague de blocage (28) est prolongée axialement vers l'anneau de verrouillage (16) par au moins une portion de paroi cylindrique (58A, 58B) séparée de la ou des lamelles de liaison flexibles (32, 33).

14. Embout selon l'une quelconque des revendications 1 à 13, **caractérisé en ce que** la paroi de la cavité interne (22, 23 ; 122, 123) comprend une portion axiale (23A) à laquelle est raccordé un élément de paroi radiale d'entrée (23B ; 123B ; 382 ; 482) s'étendant, à partir de ladite portion axiale, vers l'axe (A) de l'embout (10 ; 110 ; 310) et disposé au voisinage de l'extrémité libre (10A ; 110A) de l'embout, ledit élément de paroi radiale d'entrée (23B; 123B) formant un élément de retenue pour l'anneau de verrouillage (16).

15. Embout selon l'une quelconque des revendications 1 à 13, **caractérisé en ce que** la pièce mixte (330 ; 430) comprend une bague rigide constituée par une bague d'entrée (380 ; 480) disposée, dans le corps (320) de l'embout, à l'entrée (310A) de ce dernier et présentant des moyens formant collerette (382 ; 482) coopérant avec un repli (311) dudit corps, la face arrière (382B) de cette bague d'entrée qui est tournée du côté de l'anneau de verrouillage (316 ; 416) formant ainsi un élément de paroi radiale qui s'étend vers l'axe de l'embout à partir d'une portion axiale de la paroi de la cavité interne de l'embout.

16. Embout selon la revendication 15, **caractérisé en ce que** la bague rigide d'entrée (380 ; 480) présente une portion cylindrique (384 ; 484), qui s'étend au-delà de l'entrée du corps de l'embout à partir des moyens formant collerette (382 ; 482).

17. Embout selon l'une quelconque des revendications 15 et 16, **caractérisé en ce qu'**il comporte un élément de paroi interne (323') s'étendant sensiblement radialement à l'intérieur du corps de l'embout et **en ce que** la bague rigide d'entrée (380) présente au moins un prolongement de calage (370, 372) s'étendant à partir de ladite bague, dans le sens opposé à l'entrée du corps de l'embout, ce prolongement de calage coopérant avec ledit élément de paroi interne pour retenir la bague rigide d'entrée contre un déplacement de ladite bague vers l'intérieur du corps de l'embout.

18. Embout selon la revendication 16 **caractérisé en ce que** l'élément de paroi interne (323') est situé derrière l'anneau de verrouillage (316) dans le sens allant de l'entrée du corps de l'embout vers la première partie (322) de la cavité interne dudit embout et **en ce que** la bague rigide d'entrée (380) présente au moins une patte de calage (370, 372)qui s'étend sous une zone de manipulation (340, 342) de l'anneau de verrouillage et coopère avec ledit élément de paroi interne.

19. Embout selon l'une quelconque des revendications 1 à 18, **caractérisé en ce que** la pièce mixte (430) comporte l'anneau de verrouillage (416), une première bague rigide formant une bague de blocage (428) qui coopère avec les moyens d'étanchéité (24, 26) pour maintenir ces derniers en place dans la première partie (322) de la cavité interne, une deuxième bague rigide formant une bague d'entrée (480) qui coopère avec la paroi du corps de l'embout à l'entrée dudit corps, au moins une lamelle de liaison flexible (432, 433) qui relie l'anneau de verrouillage (416) à au moins l'une desdites première et deuxième bagues rigides (428, 480) et au moins un organe de liaison rigide (470, 472) qui relie entre elles lesdites première et deuxième bagues rigides, l'anneau de verrouillage étant disposé entre la première et deuxième bague rigide.

20. Embout selon la revendication 19, **caractérisé en ce que** la pièce mixte (430) comporte deux organes de liaison rigides formés par deux pattes (470,472) qui s'étendent, chacune, sous une zone de manipulation de l'anneau de verrouillage.

21. Embout selon l'une quelconque des revendications 1 à 20, **caractérisé en ce que** la pièce mixte (30 ; 130 ; 230 ; 330 ; 430) est réalisée en matière plastique.

## Patentansprüche

1. Schnellverbindungsstück (10; 110; 210; 310), das geeignet ist, auf ein steifes Rohr (12) aufgepresst zu werden, das in einem Abstand von seinem freien Ende einen vorragenden Wulst (14) aufweist, wobei das Verbindungsstück ein Gehäuse (20; 120; 220; 320) aufweist, das einen inneren Hohlraum mit einem ersten Teil (22; 122; 322) aufweist, der geeignet ist, Dichtungsmittel (24, 26) zu enthalten, und einem zweiten Teil (23; 13; 323), der sich zwischen dem ersten Teil (22;122; 322;) des genannten Hohlraums und dem Eingang (10A; 110A; 310A;) des Gehäuses des Verbindungsstücks befindet wobei ein Verriegelungsring (16; 216; 316; 416) in diesem zweiten Teil angeordnet ist, und gegen ein Herausreißen aus dem Körper des Verbindungsstücks durch Halterungseinrichtungen (23B; 123B; 382; 482) zurückgehalten wird, wobei der Verriegelungsring (16; 216; 316; 416) ein geschlossenes Profil aufweist und mindestens eine Zone der Verriegelung (36, 38; 236, 238; 336, 338) aufweist, die sich in einem Bereich des genannten Rings befindet, in welchem der Radius des Ringes einen kleinsten Wert hat, und der Verriegelungsring geeignet ist, eine Verriegelungskonfiguration anzunehmen, in welcher die Verriegelungzone fähig ist mit dem Wulst (14) des Rohrs (12) zusammenzuwirken, um das letztere am Platz im Verbindungsstück (10; 110; 210; 310) zu halten, und eine Konfiguration der Entriegelung anzunehmen, in der die Verriegelungszone durch Verformung des Rings elastisch verschoben ist, um sich auf einem Radius anzuordnen, der dem Radius des Wulstes (14) des Rohrs (12) zumindest gleich ist, wobei die Wand des inneren Hohlraums in ihrem axialen Teil zumindest einen Schlitz (40A, 42A; 140A, 142A, 142A; 340A, 342A) aufweist, der in den zweiten Teil dieses Hohlraums mündet, und wobei durch den Schlitz eine Zone (40, 42; 240, 242; 340, 342;440,442) des Verriegelungsrings (16; 216; 316; 416) hinausragt, wobei die Zone an einem Bereich des Ringes angeordnet ist, in dem der Radius dieses Ringes maximal ist, wobei diese Zone eine Zone zur Handhabung (Bedienung) bildet und geeignet ist, gehandhabt zu werden, indem sie an die Achse des Verbindungsstücks angenähert wird, um die Verriegelungszone zu versetzen und auf diese Weise den Verriegelungsring von der Verriegelungskonfiguration in die Entriegelungskonfiguration zu zwingen,
**dadurch gekennzeichnet, dass** der Verriegelungsring (16; 216; 316; 416) durch zumindest eine flexible Verbindungslamelle (-rippe, -blättchen, -scheibe) (32, 33; 132, 133; 232, 233; 432, 433) mit mindestens einer starren Hülse (28; 228; 380; 428; 48) verbunden ist, wobei der genannte Ring und die genannte Hülse nebeneinander in axialer Richtung angeordnet sind, und das Ganze den Verriegelungsring, die starre Hülse und die Verbindungslamelle oder Verbindungslamellen aufweist, die ein einziges Stück bilden, das als 'gemischtes Stück' (30; 130; 230; 330; 430) benannt ist, dass die starre Hülse (28; 228; 380; 428, 480) mit ersten Halterungsmitteln (48A, 49A; 270, 272; 370, 372; 470,472) versehen ist, die fähig sind, mit zweiten Halterungsmitteln (50A, 51A; 150A, 151A; 123B; 382B; 480), die am Verbindungsstückgehäuse befestigt sind, zusammenzuwirken, um die Hülse am Verbindungsstückgehäuse unabhängig von den auf den Verriegelungsring (16; 216; 316; 416) ausgeübten Einwirkungen festzustellen, und dadurch, dass die starre Hülse fähig (geeignet) ist eine andersartige Funktion zu gewährleisten als die der Verriegelung, welche durch den Verriegelungsring gewährleistet wird.

2. Verbindungsstück nach Anspruch 1, **dadurch gekennzeichnet, dass** der Verriegelungsring zwei Verriegelungszonen (36, 38; 236, 238; 336, 338; 436) aufweist, die winklig auf dem geschlossenen Profil dieses Rings beabstandet sind.

3. Verbindungsstück nach Anspruch 1 oder 2, **dadurch gekennzeichnet, dass** die Wand des inneren Hohlraums in ihrem axialen Abschnitt zwei Schlitze (40A, 42A; 140A, 142A; 340A, 342A) aufweist, die diametral entgegengesetzt sind und in den zweiten Teil dieses Hohlraums münden, wobei durch die Schlitze entsprechend zwei Zonen des geschlossenen Verriegelungsrings hinausragen, deren Abstand den größten diametralen Dimensionen des Rings entspricht, wobei diese beiden Zonen die Handhabungszonen (40, 42; 240, 242; 340, 342; 440, 442) darstellen und geeignet sind, durch gegenseitige Annäherung gehandhabt zu werden, um den Verriegelungsring von der Verriegelungskonfiguration in die Entverriegelungskonfiguration zu bewegen.

4. Verbindungsstück nach eines der vorhergehenden Ansprüche 1 bis 3, **dadurch gekennzeichnet, dass** es zumindest eine flexible Verbindungslamelle (32, 33: 132, 133; 232, 233; 332, 333; 432, 433) aufweist, die die Handhabungszone(n) (40, 42; 240, 242; 340, 342; 440, 442) des Verriegelungsrings mit der starren Hülse verbinden.

5. Verbindungsstück nach einem der Ansprüche 1 bis 4, **dadurch gekennzeichnet, dass** es zumindest eine flexible Verbindungslamelle (132, 133) aufweist, die einen radialen Teil außerhalb einer Verriegelungszone (36, 38) des Verriegelungsrings liegt mit der starren Hülse verbindet.

6. Verbindungsstück nach einem der Ansprüche 1 bis 5, **dadurch gekennzeichnet, dass** die flexiblen Verbindungslamellen (32, 33) eine Gestaltung (32B) aufweisen, die geeignet ist, deren Flexibilität lokal zu erhöhen.

7. Verbindungsstück nach einem der Ansprüche 1 bis 6, **dadurch gekennzeichnet, dass** es Mittel (32',33'; 317A, 317B) aufweist, die sich dem Zurückziehen des Verriegelungsringes (16; 216) bei der Einführung des Rohres (12) in das Verbindungsstück widersetzen.

8. Verbindungsstück nach einem der Ansprüche 1 bis 7, **dadurch gekennzeichnet, dass** das gemischte Stück (30; 130; 230; 330; 430) eine starre Hülse aufweist, die gebildet ist durch eine Blockierungshülse (28; 228; 428), die direkt mit einer Dichtung zusammenwirkt, die den Dichtungsmitteln (24, 26) angehört, um diese letztgenannten in dem ersten Teil (22; 122; 322) des inneren Hohlraums am Platz zu halten, wobei die Blockierungshülse hinter dem Verriegelungsring (16; 216; 416) in Bewegungsrichtung vom Eingang (10A; 11A) des Verbindungsstücks hin zu dem ersten Teil des inneren Hohlraums angeordnet ist.

9. Verbindungsstück nach Anspruch 8, **dadurch gekennzeichnet, dass** es ein radiales Seitenwandeingangselement (23B; 123B; 382; 482) aufweist, das mit dem Verbindungsstückgehäuse (20; 120; 320) verbunden ist, und am Eingang des Gehäuses angeordnet ist, wobei sich das Element von einem axialen Abschnitt der Wand des Gehäuses des Verbindungsstücks zu der Achse (A) des Verbindungsstücks hin erstreckt, und die starre Blockierungshülse (228; 428) zumindest eine starre Lasche (270, 272; 470, 472) aufweist, die sich unter eine Handhabungszone (240, 242; 440,442) des Verriegelungsringes (216; 416) erstreckt, wobei die starre Lasche mit dem Element der radialen Wand zusammenwirkt, um die Blockierungshülse an das Gehäuse des Verbindungsstücks festzustellen.

10. Verbindungsstück nach einem der Ansprüche 8 und 9, **dadurch gekennzeichnet, dass** der innere Hohlraum des Gehäuses (20; 120) des Verbindungsstücks in einer Zwischenzone zwischen dessen ersten und zweiten Teil (22, 23) zumindest eine Halterungsfläche (50A, 51A; 150A, 151A) für die Blockierungshülse (28), die entgegengesetzt zum Eingang (10A; 110A) des Verbindungsstücks gedreht ist, aufweist, und dadurch dass die Blockierungshülse zumindest eine Blockierungsfläche (48A, 49A) aufweist, die geeignet ist, mit der Halterungsfläche zusammenzuwirken.

11. Verbindungsstück nach Anspruch 10, **dadurch gekennzeichnet, dass** die Haltefläche (50A, 51 A; 150A, 151A) durch eine radiale Front einer Aussparung (50, 51; 150, 151) gebildet ist, die in der Zwischenzone angeordnet ist, wohingegen die Blockierungsfläche 48A, 49A) auf einem radialen Vorsprung (48, 49) der Blockierungshülse (28) ausgebildet ist, die in diese Aussparung eingeführt werden kann.

12. Verbindungsstück nach Anspruch 7 und einem der Ansprüche 8 bis 10, **dadurch gekennzeichnet, dass** das gemischte Stück (30) zumindest eine Lamelle zur Positionierung (32', 33) aufweist, die sich ausgehend vom Verriegelungsring (16) rückwärts erstreckt, und die geeignet ist am Anschlag mit der Blockierungshülse (28) zusammenzuwirken, um sich dem Zurückziehen des Verriegelungsringes (16) bei der Einführung des Rohrs (12) in das Verbindungsstück zu widersetzen.

13. Verbindungsstück nach einem der Ansprüche 8 bis 12, **dadurch gekennzeichnet, dass** die Blockierungshülse (28) axial in Richtung auf den Verriegelungsring (16) durch zumindest einen zylindrischen Wandabschnitt (58A, 58B) verlängert ist, der von der flexiblen Verbindungslamelle oder von flexiblen Verbindungslamellen (32, 33) getrennt ist.

14. Verbindungsstück nach einem der Ansprüche 1 bis 13, **dadurch gekennzeichnet, dass** die Wand des inneren Hohlraums (22, 23; 122, 123) einen axialen Abschnitt (23A) aufweist, an dem ein radiales Eingangswandelement (23B; 123B; 382; 482) angeschlossen ist, das sich von dem axialen Abschnitt in Richtung auf die Achse (A) des Verbindungsstücks (10; 110; 310) erstreckt, und in der Nähe des freien Endes (10; 110A) des Verbindungsstücks angeordnet ist, wobei das radiale Eingangs-Wandelement (23 B; 123B) ein Zurückhalteelement für den Verriegelungsring (16) bildet.

15. Verbindungsstück nach einem der Ansprüche 1 bis 13, **dadurch gekennzeichnet, dass** das gemischte Stück (330; 430) eine starre Hülse aufweist, die aus einer Eingangshülse (380; 430) besteht, die im Gehäuse (320) des Verbindungsstücks am Eingang (310) des letztgenannten angeordnet ist, und Mittel aufweist, die einen Kragen (382; 482) ausbildet, die mit einem Falz (311) des Gehäuses zusammenwirken, wobei die Hinterseite (382B) dieser Eingangshülse, die in Richtung auf die Seite des Verriegelungsringes (316; 416) gewandt ist, so ein radiales Wandelement ausbildet, das sich zur Achse des Verbindungsstücks hin erstreckt, ausgehend von einem axialen Abschnitt der Wand des inneren Hohlraums des Verbindungsstücks.

16. Verbindungsstück nach Anspruch 15, **dadurch gekennzeichnet, dass** die starre Eingangshülse (380; 480) einen zylindrischen Abschnitt (384; 484) aufweist, der sich ausgehend von den Mitteln, die einen Kragen (382; 482) bilden, über den Eingang des Gehäuses des Verbindungsstücks hinaus erstreckt.

17. Verbindungsstück nach einem der Ansprüche 15 und 16, **dadurch gekennzeichnet, dass** es ein Element der inneren Wand (323') aufweist, das sich deutlich radial ins Innere des Gehäuses des Verbindungsstücks erstreckt, und dadurch dass die starre Eingangshülse (380) zumindest eine Feststellungsverlängerung (370, 372) aufweist, die sich ausgehend von der Hülse im entgegengesetzten Sinn des Eingangs des Verbindungsstückgehäuses erstreckt, wobei diese Feststellungsverlängerung mit dem Element der inneren Wand zusammenwirkt, um die starre Eingangshülse gegen eine Verschiebung derselben in das Innere des Gehäuses des Verbindungsstücks zurück zu halten.

18. Verbindungsstück nach Anspruch 16, **dadurch gekennzeichnet, dass** das Element der inneren Wand (323') hinter dem Verriegelungsring (316) angeordnet ist ausgehend von dem Eingang des Gehäuses des Verbindungsstücks in Richtung auf den ersten Teil (322) des inneren Hohlraums des Verbindungsstücks, und dadurch dass die starre Eingangshülse (380) zumindest eine Feststellungslasche (370, 342) aufweist, die sich unter eine Handhabungszone (340, 342) des Verriegelungsringes erstreckt und mit dem Element der inneren Seitenwand zusammenwirkt.

19. Verbindungsstück nach einem der Ansprüche 1 bis 18, **dadurch gekennzeichnet, dass** das gemischte Stück (430) aufweist: den Verriegelungsring (416), eine erste starre Hülse, die eine Blockierungshülse (428) bildet, die mit den Dichtungsmitteln (24, 26) zusammenwirkt, um die letztgenannten im ersten Teil (322) des inneren Hohlraums am Platz zu halten, eine zweite starre Hülse, die eine Eingangshülse (480) bildet, die mit der Wand des Gehäuses des Verbindungsstücks am Eingang des Gehäuses zusammenwirkt, zumindest eine flexible Verbindungslamelle (432, 433), die den Verriegelungsring (416) mit zumindest einer der ersten und zweiten starren Hülsen (428, 480) verbindet, und zumindest ein starren Bindungsteil (470, 472), das die erste und zweite starre Hülse miteinander verbindet, wobei der Verriegelungsring zwischen der ersten und der zweiten starren Verbindungshülse angeordnet ist.

20. Verbindungsstück nach Anspruch 19, **dadurch gekennzeichnet, dass** das gemischte Stück (430) zwei starre Bindungsteile aufweist, die durch zwei Laschen (470, 472) gebildet sind, die sich jeweils unter eine Handhabungszone des Verriegelungsringes erstrecken.

21. Verbindungsstück nach einem der Ansprüche 1 bis 20, **dadurch gekennzeichnet, dass** das gemischte Stück (30; 130; 230; 330; 430) aus Kunststoff hergestellt ist.

## Claims

1. Fast connecting end piece (10; 110; 210; 310) capable of being fitted onto a rigid tube (12) which has a bead (14) projecting radially away from its free end, the end piece comprising a body (20; 120; 220; 320) which has an inside cavity with a first section (22; 122; 322) capable of containing means of sealing (24; 26) and a second section (23; 123; 323) located between the first section (22; 122; 322) of the said cavity and the inlet (10A; 110A; 310A) of the body of the end piece, a locking ring (16; 2 16; 3 16; 416) being arranged in this second section and being retained against being torn away out of the body of the end piece by retainers (23B; 123B; 382; 482), the locking ring (16; 216; 316; 416) having a closed profile and with at least one locking area (36, 38; 236, 238; 336, 338) located in a region of the said ring in which the radius of this ring is minimum, the said locking ring being capable of adopting a locking configuration in which the said locking area is capable of working in conjunction with the bead (14) of the tube (12) to keep the latter in place in the end piece (10; 110; 210; 310) and an unlocking configuration in which the locking area is moved elastically by deformation of the ring in order to be located on a radius at least equal to the radius of the bead (14) of the tube (12), the wall of the inside cavity having, in its axial portion, at least one slot (40A, 42A; 140A, 142A; 340A, 342A) emerging in the second section of this cavity, a slot through which an area (40, 42; 240, 242; 340, 342; 440, 442) of the locking ring (16; 216; 316; 416) passes and goes beyond, located in a region of the said ring in which the radius of this ring is maximum, this area constituting a manipulation area and being capable of being manipulated by being brought closer to the centreline of the end piece in order to move the locking area and thus prompt the locking ring from its locking configuration into its unlocking configuration,
**characterised in that** the locking ring (16; 216; 316; 416) is connected by at least one flexible connecting plate (32, 33; 132, 133; 232, 233; 432, 433) to at least one rigid bush (28; 228; 380; 428, 480), the said ring and the said bush being located one alongside the other in the axial direction, the assembly comprising the locking ring, the rigid bush and the connecting plate or plates forming a single part, called a "combined component" (30; 130; 230; 330; 430), **in that** the rigid bush (28; 228; 380; 428, 480) is complete with first holding means (48A, 49A; 270, 272; 370, 372; 470, 472) suitable for working in conjunction with second holding means (50A, 51A; 150A, 151A; 123B; 382B; 480) integral with the body of the end piece to fix the said bush in relation to the body of the end piece independently of the force exerted on the locking ring (16; 216; 316; 416), and **in that** the rigid bush is suitable for ensuring distinct operation of the locking function which is assured by the locking ring.

2. End piece according to Claim 1, **characterised in that** the locking ring comprises two locking areas (36, 38; 236, 238; 336, 338; 436) spaced angularly over the closed profile of this ring.

3. End piece according to Claim 1 or 2, **characterised in that** the wall of the inside cavity, in its axial portion, has two slots (40A, 42A; 140A, 142A; 340A, 342A), diametrically opposite, emerging in the second section o f this cavity, slots through which two areas of the closed locking ring respectively pass and go beyond, the spacing of which corresponds to the largest diameter dimensions of the said ring, these two areas constituting manipulation areas (40, 42; 240, 242; 340, 342; 440, 442) and being capable of being manipulated by being brought closer to each other in order to prompt the locking ring from its locking configuration into its unlocking configuration.

4. End piece according to any one of the Claims I to 3, **characterised in that** it comprises at least one flexible connection plate (32, 33; 132, 133; 232, 233; 332, 333; 432, 433) connecting the manipulation area or areas (40, 42; 240, 242; 340, 342; 440, 442) of the locking ring to the rigid bush.

5. End piece according to any one of the Claims I to 4, **characterised in that** it comprises at least one flexible connection plate (132, 133) connecting an outer radial section of a locking area (36, 38) of the locking ring to the rigid bush.

6. End piece according to any one of the Claims 1 to 5, **characterised in that** the flexible connecting plate or plates (32, 33) have a conformation (32B) suitable for locally increasing their flexibility.

7. End piece according to any one of the Claims 1 to 6, **characterised in that** it has means (32', 33'; 317A, 317B) for opposing the recoil of the locking ring (16; 316) when the tube (12) is inserted into the end piece.

8. End piece according to any one of the Claims I to 7, **characterised in that** the combined component (30; 130; 230; 330; 430) includes a rigid bush made up of a lock ring (28; 228; 428) which works directly in conjunction with a seal belonging to the means of sealing (24, 26) to keep the latter in place in the first section (22; 122; 322) of the inside cavity, the said lock ring being located behind the locking ring (16; 216; 416) in the direction going from the inlet (10A; 110A) of the end piece towards the said first section of the inside cavity.

9. End piece according to Claim 8, **characterised in that** it comprises an inlet radial wall part (22B; 123B; 382; 482) integral with the body (20; 120; 320) of the end piece and located at the inlet of the latter, the said part extending, from an axial portion of the wall of the end piece body to the centreline (A) of the said end piece, and **in that** the rigid locking bush (228; 428) has at least one rigid lug (270, 272; 470, 472) which extends under an area (240, 242; 440, 442) for manipulating the locking ring (216; 416), the said rigid lug working in conjunction with the said radial wall part to fix the lock ring in relation to the body of the end piece.

10. End piece according to any one of the Claims 8 and 9, **characterised in that** the inside cavity in the body (20; 120) of the end piece, in an intermediate area between its first and second sections (22, 23), has at least one area (50A, 51A; 150A, 15 1A) to hold the locking bush (28) turned opposite the inlet (10A; 110A) of the end piece, and **in that** the said locking bush has at least one locking surface (48A, 49A) suitable for working in conjunction with the said holding surface.

11. End p iece a ccording to C laim 10, **characterised in that** the holding surface (50A, 51A; 150A, 151A) is formed by a radial face of a clearance (50, 51; 150, 151) made in the said intermediate area, while the locking surface (48A, 49A) is formed on a radial projection (48, 49) of the locking bush (28) capable of being inserted into this clearance.

12. End piece according to Claim 7 and any one of the Claims 8 to 10, **characterised in that** the combined component (30) has at least one locating plate (32', 33') extending towards the rear from the locking ring (16) and capable of working in conjunction as a stop with the locking bush (28) to oppose recoil of the locking ring (16) when the tube (12) is inserted into the end piece.

13. End piece according to any one of the Claims 8 to 12, **characterised in that** the locking bush (28) is extended axially towards the locking ring (16) by at least a portion of cylindrical wall (58A, 58B) separated from the flexible connecting plate or plates (32, 33).

14. End piece according to any one of the Claims 1 to 13, **characterised in that** the wall of the inside cavity (22, 23; 122, 123) comprises an axial portion (23A) to which is connected an inlet radial wall part (23B; 123B; 382, 482) extending, from the said axial portion towards the centreline (A) of the end piece (10; 110; 310) and arranged in the vicinity of the free end (10A; 110A) of the end piece, the said inlet radial wall part (23B; 123B) forming a retainer for the locking ring (16).

15. End piece according to any one of the Claims 1 to 13, **characterised in that** the combined component (330; 430) comprises a rigid bush made up of an inlet bush (380; 480) arranged, in the body (320) of the end piece, at the inlet (310A) of the latter and having means which form a flange (382; 482) working in conjunction with a fold (311) in the said body, the rear face (382B) of this inlet bush which is turned on the side of the locking ring (316; 416) thus forming a radial wall part which extends towards the centreline of the end piece from an axial portion of the wall of the inside cavity of the end piece.

16. End piece according to Claim 1 5, **characterised in that** the inlet rigid bush (380; 480) has a cylindrical portion (384; 484) which extends beyond the inlet of the body of the end piece from means which form a flange (382; 482).

17. End piece according to any one of the Claims 15 and 16, **characterised in that** it has an inside wall part (323') extending more or less radially inside the body of the end piece, and **in that** the inlet rigid bush (380) has at least one fixing extension (370, 372) extending from the said bush, in the opposite direction to the inlet of the end piece body, this fixing extension working in conjunction with the said inside wall part to retain the inlet rigid bush against movement of the said bush towards the inside of the body of the end piece.

18. End piece according to Claim 16, **characterised in that** the inside wall part (323') is located behind the locking ring (316) in the direction going from the inlet of the end piece body to the first section (322) of the inside cavity of the said end piece, and **in that** the inlet rigid bush (380) has at least one fixing lug (370, 372) which extends under an area (340, 342) for manipulating the locking ring and works in conjunction with the said inside wall part.

19. End piece according to any one of the Claims 1 to 18, **characterised in that** the combined component (430) consists of the locking ring (416), a first rigid bush forming a locking bush (428) which works in conjunction with the seals (24, 26) to keep the latter in place in the first section (322) of the inside cavity, a second rigid bush forming an inlet bush (480) which works in conjunction with the wall of the body of the end piece at the inlet of the said body, at least one flexible connecting plate (432, 433) which connects the locking ring (416) to at least one of the said first and second rigid bushes (428, 480) and at least one rigid connection unit (470, 472) which connects to each other the said first and second rigid bushes, the locking ring being arranged between the first and second rigid bush.

20. End piece according to Claim 19, **characterised in that** the combined component (430) has two rigid connection units formed by two lugs (470, 472), each of which extends under an area for manipulating the locking ring.

21. End piece according to any one of the Claims 1 to 20, **characterised in that** the combined component (30; 130; 230; 330; 430) is made from plastic.
